# EUROPEAN PATENT APPLICATION

(11) **EP 0 653 758 A2**
(43) Date of publication of application: **17.05.1995**
(21) Application number: 94117855.0
(22) Date of filing: 11.11.1994
(51) Int. Cl.: G11B 27/32, G11B 27/036, G06F 3/06

(54) **Disc recording apparatus and file management method**

(30) Priority: 12.11.1993 JP 283339/93
(71) Applicant: SONY CORPORATION, Tokyo (JP)
(72) Inventor: Nakamura, Masanobu, c/o Sony Corp., Shinagawa-ku, Tokyo (JP); Maeda, Hideho, c/o Sony Corp., Shinagawa-ku, Tokyo (JP)
(74) Representative: Körber, Wolfhart, Dr. rer.nat.

(57) **Abstract**

A disc recording apparatus and a file management method are disclosed. In the disc recording apparatus and the file management method, a file management area is provided in a predetermined position in a recordable program area (15) of a disc- shaped recording medium (10) by formatting, so that file management information recorded in a replay-only area (12) is transferred to the file management area, to update the file management information of the file management area each time the data file is recorded in the recordable program area (15). Thus, it is possible to uniformly control each of data files recorded in the replay-only program area (12) and the recordable program area (15) of the disc-shaped recording medium (10).

## Description

### BACKGROUND

### 1. Field of the Invention

This invention relates to a recording apparatus for a disc-shaped recording medium having a replay-only area having at least one data file and the file management information for managing the data file recorded thereon and a recordable area capable of recording data files.

### 2. Related Art

There have so far been known disc-shaped recording media, such as a replay-only optical disc, e.g., a so-called compact disc having data pre-recorded as pits, and a recording/reproducing disc, such as a magneto-optical disc or a hard disc having a data recordable area formed by a magnetic recording film or a magneto-optical recording film. There is also known a hybrid disc in which the replay-only area and the recording area are present in a mixed or hybrid state.

For recording computer data on such optical disc, a data file structure is employed.

With the hybrid disc, file management data indicating the file structure of the replay-only area is recorded in the replay-only area. That is, since there is no recorded data at the time of shipment, it is impossible to record management data of the file structure for the recordable area in the replay-only area. Thus it is necessary to record file management data for the recordable area in the recordable area.

This renders it possible to effect file management for the hybrid disc for both the replay-only area and the recordable area. However, since the file management data is present separately in the replay-only area and the recordable area, the file management data in these two areas need to be managed separately, resulting in complicated management.

Although transcription of the boot directory is contemplated for the hybrid disc, this concept is basically intended for different purposes since it is not related to the file management data.

### OBJECT AND SUMMARY OF THE INVENTION

It is therefore an object of the present invention to provide a disc recording apparatus and a file management system whereby it is possible to uniformly control each of data files recorded in the replay-only program area and the recordable area of the disc-shaped recording medium having the recordable area and the replay-only program area in which at least one data file is recorded and in which the file management data for controlling the data file is recorded.

According to the present invention, there is provided a disc recording apparatus and a file management method. With a disc-shaped recording medium having a replay-only program area having at least one data file and file management information for managing the data file pre-recorded therein, and having a recordable area, the recordable area is formatted, and a file management area in which file management information for managing the data file recorded in the replay only area and a data file recorded in the recordable area is recorded is provided in a predetermined position in the recordable area. The file management information recorded in the replay-only area is transferred into the file management area. Each time the data file is recorded in the recordable area, the file management information to be updated with the recording of the data file is updated.

### BRIEF DESCRIPTION OF THE DRAWINGS

Fig.1 is a block diagram showing a magneto-optical disc device according to the present invention.

Fig.2 is a plan view of an entire magneto-optical disc employed in the magneto-optical disc device shown in Fig.1.

Fig.3 shows the sector structure of the magneto-optical disc shown in Fig.2.

Fig.4 shows recording contents in the initial state of the magneto-optical disc shown in Fig.2.

Fig.5 shows the contents of a file allocation table produced in the replay-only area of the magneto-optical disc device shown in Fig.1.

Fig.6 shows the contents of a file directory table produced in the replay-only area of the magneto-optical disc device shown in Fig.1.

Fig.7 shows the recording contents of a formatted magneto-optical disc.

Fig.8 shows a logical arrangement of a file allocation table.

Fig.9 shows the contents of the file allocation table.

Fig.10 shows the contents of a file directory table.

Fig.11 shows the recording contents of a magneto-optical disc to which the file allocation table has been transcribed.

Fig.12 shows the contents of an updated file allocation table.

Fig.13 shows the contents of an updated file directory table.

Fig.14 is a flow chart showing the formatting operation for the magneto-optical disc.

Fig.15 is a flow chart showing the file recording operation for the magneto-optical disc.

### DESCRIPTION OF PREFERRED EMBODIMENTS

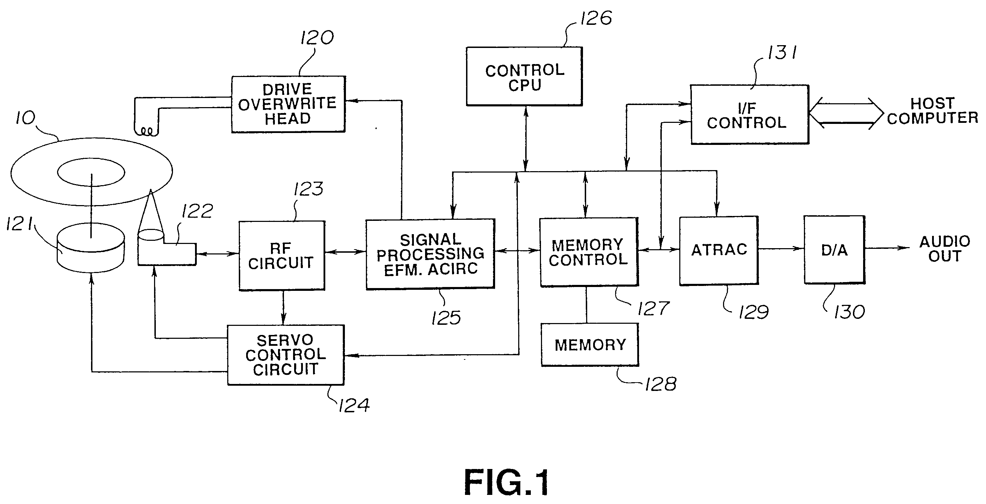

The magneto-optical disc device according to the present invention is explained by referring to the plan view of Fig.1. Specifically, the magneto-optical disc device is a magnetic field modulation overwrite type magneto-optical disc.

Referring to Fig.1, a spindle motor 121 is controlled by a servo control circuit 124 for rotationally driving the magneto-optical disc 10. An optical pickup 122 is focusing and tracking controlled by a servo control circuit 124 for accessing the magneto-optical disc 10. A magnetic field overwrite head 120 is operated only during recording. During reproduction, playback signals detected by the optical pickup 122 are fed to an RF circuit 123. The RF circuit 123 acquires signals required for servo control operations and RF signals and transmits the two signals to a servo control circuit 124 and to a signal processing circuit 125. During recording, the signal processing circuit 125 performs encoding for error correction, for example, parity appendage and interleaving, while performing EFM (eight-to-fourteen modulation). During reproduction, the signal processing circuit 125 performs decoding for error correction and EFM for error correction on the RF signals. A memory 128 is configured by a RAM for temporarily storing recording signals and playback signals. The memory 128 is controlled by a memory control circuit 127. An adaptive transform acoustic coding (ATRC) encoder/ decoder 129 is a circuit for compressing and expanding data in accordance with the ATRC system which is actuated when the recording signals are audio signals. Data other than the audio signals are exchanged between the encoder/ decoder 129 and a host computer via an interfacing circuit 131. A control CPU 126 controls the operation of the components of the disc device in their entirety, such as the signal processing circuit 125.

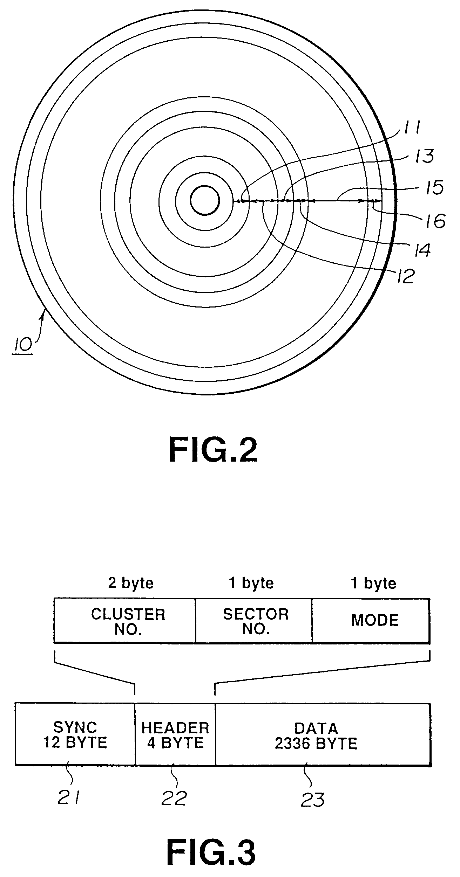

Referring to Fig.2, a disc-shaped recording medium employed in the above-described is explained in detail.

The disc-shaped recording medium is a so-called hybrid disc having both a replay-only program area 12 and a user recordable program area 15, such as the magneto-optical disc 10 shown in Fig.2. Looking from the inner most region, the disc-shaped recording medium has a lead-in area 13, the replay-only program area 12, a power calibration area 13, an user table-of-contents (UTOC) area 14, the user recordable program area 15 and a lead-out area 16.

As shown in the diagrammatic view of Fig.3, the magneto-optical disc 10 has its sector made up of a 12-byte sync field for synchronization data 21, which is a field for sector synchronization, a 4-byte header 22, which is a field for storing data indicating sector addresses or modes, and a 2336 byte data field 23 for recording data per se.

The lead-in area 11 is an area in which there are recorded start addresses for respective areas, an optimum recording power for the disc and the information for respective tracks in the replay-only area 12. The tracks mean an assembly of logical data handled by a data management system, executing data management, such as management of music recording/ reproduction or of computer files.

The replay-only program area 12 is an area in which data are pre-recorded as pits at the time of disc fabrication. At least a data file and the file management information for managing the date file are recorded in the replay-only program area 12.

The file handled by the magneto-optical disc 10 is an assembly of data which is read or written with at least one sector as a unit termed a block. On the magneto-optical disc 10, there is recorded a file allocation table for recording and managing the using state on the block basis. Serial numbers are appended on the block basis to the files. The serial number is "0" during non-use time and assumes specified values indicating the number of the next block or indicating that the data ends in the block. In addition, each file or directory is managed by a file/directory table indicating the name, date of formulation or attributes of the file or directory, the leading block number etc. of the file, and so forth. Consequently, each file can be accessed by having reference to the leading block number of the file/directory table and values held by the corresponding block on the file allocation table, such as the next block number.

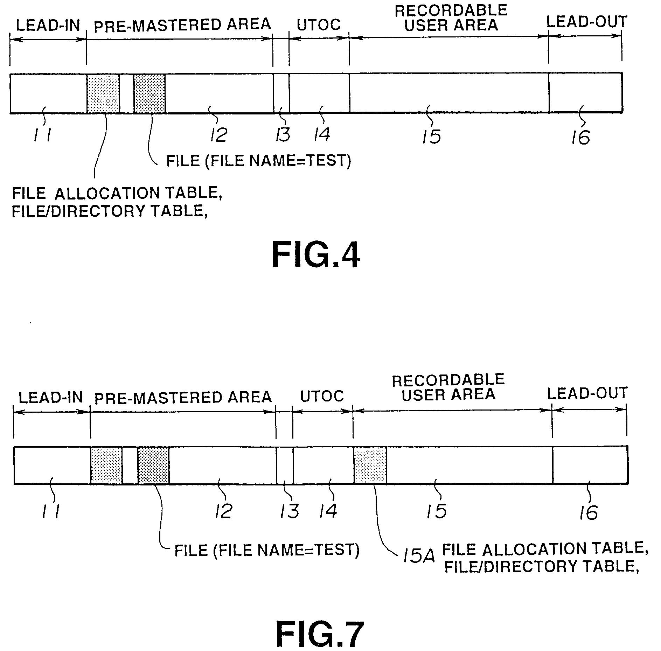

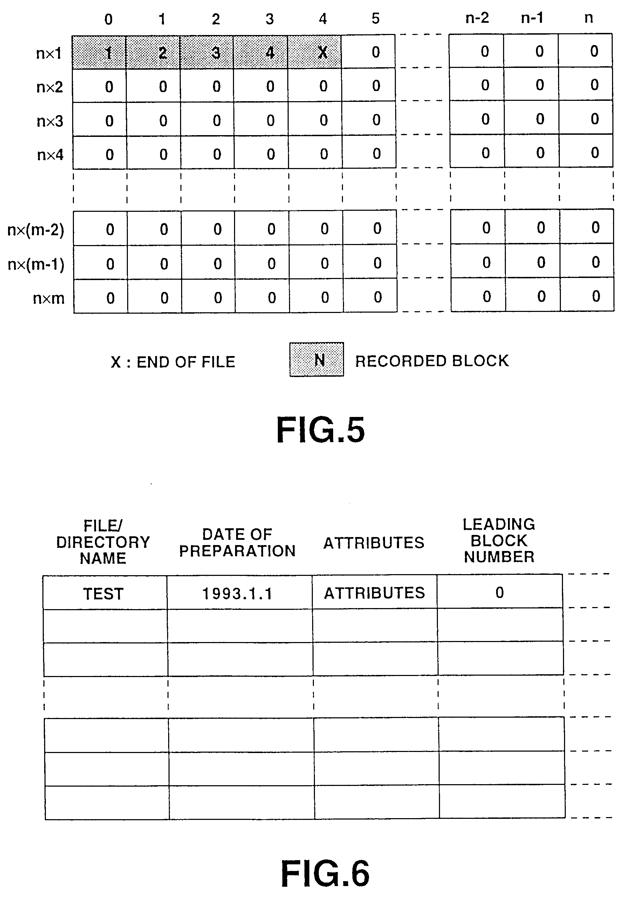

It is assumed that, in the present embodiment, a file having a file name "TEST" is present in the replay-only program area 12, as shown in Fig.4 showing an initial state of the magneto-optical disc 10. It is also assumed that the file allocation table shown in Fig.5, recording the management information for the file, and a file directory table, shown in Fig.6, is previously formulated.

The file allocation table, shown in fig.5, has n blocks and m blocks on the abscissa and on the ordinate, respectively. The sum total of the blocks is n x m. Fig.5 shows that data has been recorded in hatched blocks bearing block numbers "0" to "4". That is, a value "0" is entered in blocks where data are not recorded, while values other than "0" are entered in blocks where data are recorded. The value "1" entered in the block having the block number "0" indicates that the information next to the file recorded in the block number "0" is recorded in the block having the block number "1". A value "X" entered in the block having the block number indicates that the block is the last block in the file. In Fig.5, pre-recorded blocks are formed consecutively. However, if a new file is recorded in a block from which the unnecessary file has been erased, there are occasions in which data of the same file are recorded in plural non-consecutive blocks. In such case, the next block can be found out easily by employing the file allocation table shown in Fig.5.

On the other hand, the file/ directory table shown in Fig.6 indicates that the file having the file number "TEST", prepared on Jan.1, 1993, has been recorded as from the block having the block number "0".

Thus the leading block may be found from the name of the file/ directory by having reference to the file/ directory table and the next and succeeding blocks may be accessed as from the leading block by having reference to the file allocation table.

On the other hand, the power calibration area 13 is an area for adjusting the recording power. The UTOC area 14 is an area in which there is pre-recorded the information concerning respective tracks in the recordable program area 15.

The recordable program area 15 is an area in which data recording and reproduction may be made freely. The recordable program area is initially in such state in which no data is recorded and hence no data management is required.

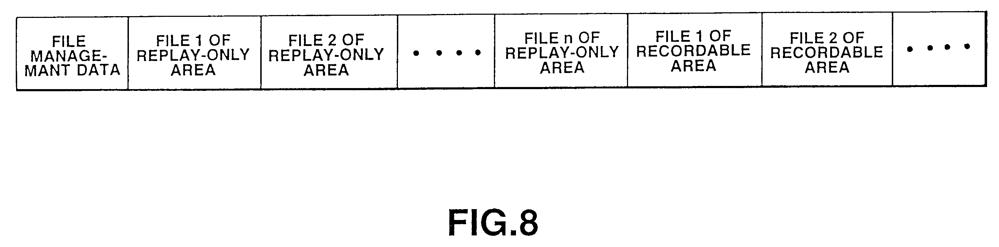

The recordable program area 15 of the magneto-optical disc 10 in such initial state is now formatted so that a file management area 15A in which to record the file management information for managing the data file recorded in the replay-only program area 12 and the data file recorded in the recordable program area 15 is provided at a pre-set location in the recordable program area 15A, as shown in Fig.7. The file management information recorded in the replay-only area 12, that is the file allocation table and the file directory table as shown in Fig.5, are transcribed into the file management area 15A. Thus the file management table showing the logical disposition of the data files is now formulated in the file management area 15A, as shown in Fig.8.

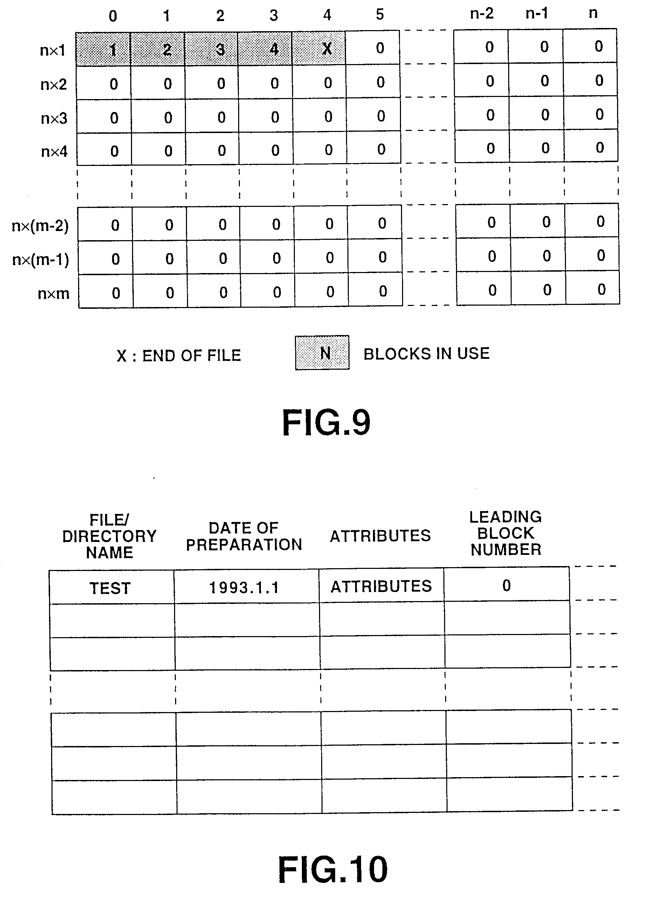

Specifically, with the present embodiment, the file allocation table shown in Fig.9 and the file directory table shown in Fig.10 are formed in the file management area 15A formed at the pre-set location in the recordable program area 15.

The file allocation table shown in Fig.9 indicates that data has now been recorded from the block number "0" to the block number "4". On the other hand, the file/directory table shown in Fig.10 indicates that the file having the file name "TEST" formulated on Jan.1, 1993 is pre-recorded as from the block number "0".

Every time the data file is recorded in the recordable program area 15, the file management information in the file management area 15A is updated.

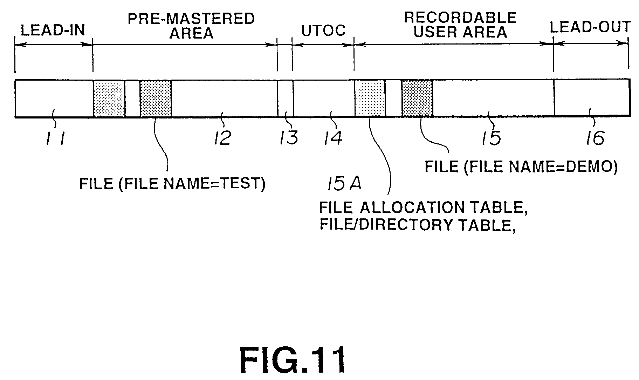

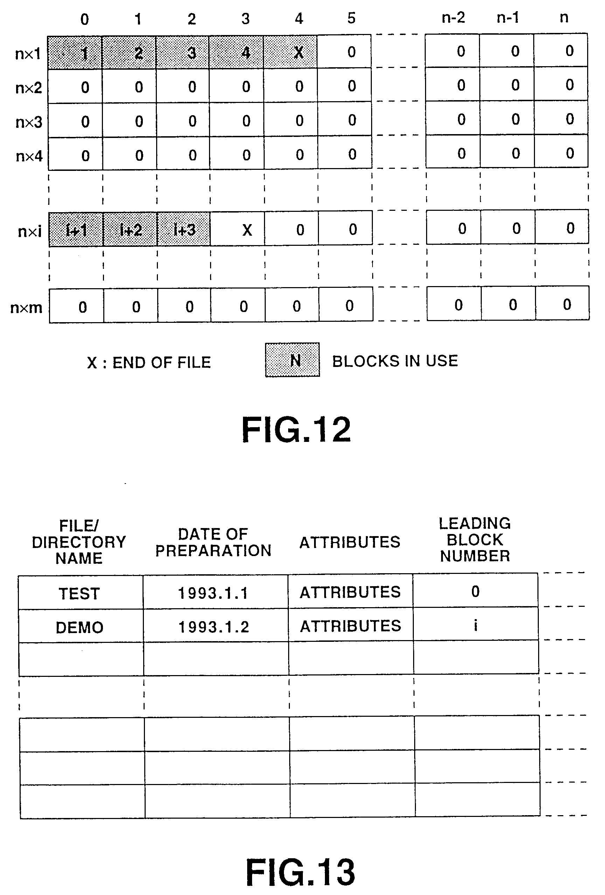

Assuming that a file with the file name "demo", having a size of four blocks and a leading block number i, has now been prepared in the recordable program area 15, the file allocation table is updated as shown in Fig.11, for indicating that the block numbers "0" to "4" are in use and the block numbers "i" to "i+3" are also in use. The file/ directory table is updated as shown in Fig.12, for indicating that the file with the file name "TEST" is recorded s from the block number "0" and that the file with the file name "demo", prepared on Jan.2, 1993, is now recorded as from the file number "i".

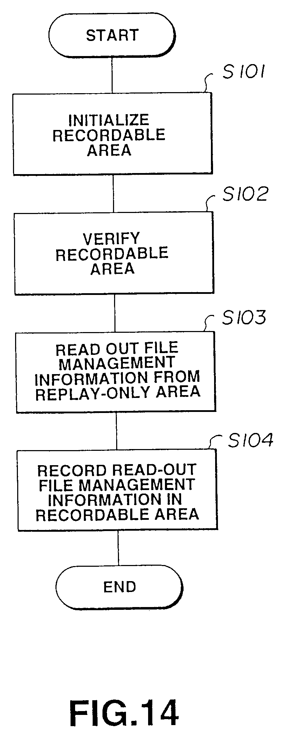

Referring to the flow chart of Fig.14, the method for formatting the magneto-optical disc 10 with the present embodiment is explained in detail.

At step S101, the recordable area is initialized. At a step S102, the initialized recordable area is verified. At the next step S103, the file management information is read from the replay-only area. Subsequently, at a step S104, the read-out file management information is recorded in a pre-set region of the recordable area. Processing then comes to a close.

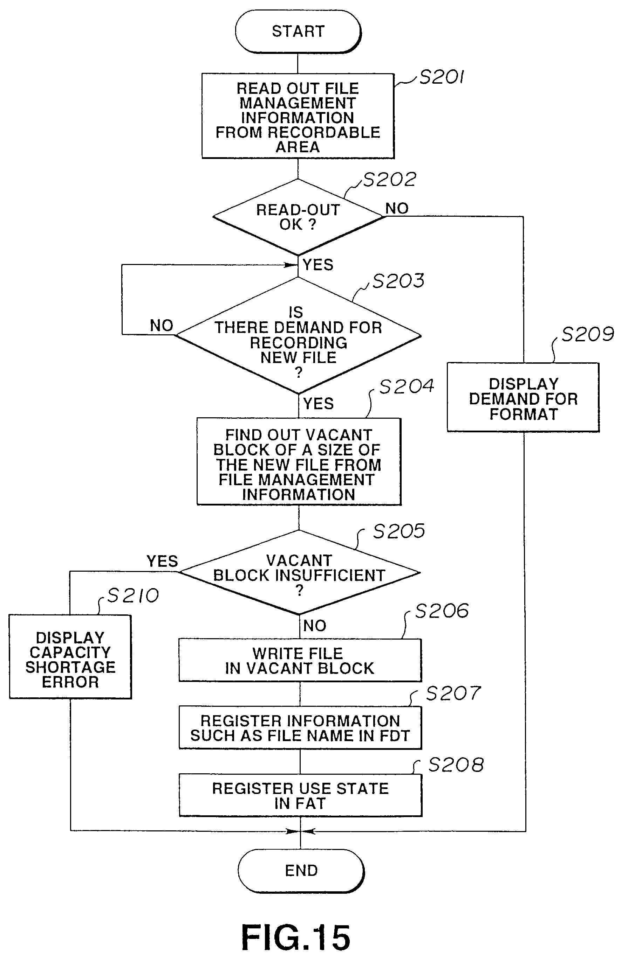

Referring to the flow chart shown in Fig.15, the method for accessing the magneto-optical disc 10 is explained in detail.

When the magneto-optical disc 10 is loaded in position, the file management information is read out from the recordable area. At a step S202, it is judged whether or not the file management information has been read out. If the result is NO, it is judged that the magneto-optical disc 10 has not been formatted. Processing transfers to a step S209 where it is displayed that formatting is necessary, advising the user of that effect. If the result at the step S202 is YES, processing transfers to a step S203 to await a request for the recording of a new file. If the request for the recording of a new file is made, processing transfers to a step S204 where reference is had to search for a vacant block having a capacity corresponding to the capacity of the new file. This may be achieved by searching for blocks having values "0" in the file allocation table shown in Figs.5 and 12 beginning from the block bearing the occasionally least value. If there ins no vacant block having the capacity corresponding to that of the new file, processing transfers to a step S210 in order to apprise the user that the block capacity is insufficient. Processing then comes to a close. If the vacant block is found to be not insufficient at the step S205, processing transfers to a step S206.

The data of the new file is written at the step S206 in the vacant block having the capacity of the thus found new file.

At a step S207, the information such as the file name of the file/directory table is rewritten. At a step S208, the information of the file allocation table is rewritten. Processing then comes to a close.

The processing at the step S207 and that at the step S207 may also be reversed in sequence.

The processing shown by the flow charts shown in Figs.14 and 15 is executed by the CPU 26 shown in Fig.1.

With the above-described magneto-optical disc 10, the file management information recorded in the replay-only area 12 is transcribed in the file management area 15A located at the pre-set location in the user recordable program area 15 and the file management information is updated each time a data file is recorded in the recordable program area 15. The data files recorded in the replay-only program area 12 and in the recordable program area 15 may be collectively managed by the data management information recorded in the file management area 15A.

Since the file management information in the file management area 15A is updated each time data files are recorded in the user recordable program area 15, it becomes possible to collectively manage the data files recorded in the replay-only program area 12 and in the recordable program area 15.

## Claims

1. A disc recording apparatus for recording a data file in a user recordable area (15) on a disc-shaped recording medium (10) having a replay-only area (12) in addition to said user recordable area (15), said replay-only program area (12) having pre-recorded therein at least one data file and the file management information for managing said at least one data file, comprising
reproducing means (122) for reproducing the information recorded on said disc-shaped recording medium (10),
recording means (120) for recording the information in said user recordable area (15) of the disc-shaped recording medium (10), and
control means (126) for controlling said reproducing means (122) from said replay-only area (12) for reproducing said file management information at the time of initializing the user recordable area (15) of the disc-shaped recording medium (10), said control means (126) also controlling said recording means (120) for recording said file management information at a pre-set location in said user recordable area (15).

2. The disc recording apparatus as claimed in claim 1 wherein, when a new data file is recorded in the user recordable area (15) of the disc-shaped recording medium (10), the file management information updated with the recording of said data file is overwritten by said recording means (120) at said pre-set location in said user recordable area under control by said control means(126).

3. The disc recording apparatus as claimed in claim 2 wherein, each time a new data file is recorded in the user recordable area (15) of the disc-shaped recording medium (10), the file management information updated with the recording of said data file is overwritten by said recording means (120) at said pre-set location in said user recordable area (15) under control by said control means (126).

4. The disc recording apparatus as claimed in claim 2 further comprising
alarming means for alarming that the recordable area of the disc-shaped recording medium (10) is not initialized,
wherein the file management information recorded at the pre-set location of the user recordable area (15) is reproduced by said reproducing means (120) at the starting time under control by said control means, said alarming means issuing an alarm in case of failure in reproduction under control by said control means (126).

5. A method for managing data files for a disc-shaped recording medium (10) having a replay-only area in addition to a user recordable area (15), said replay-only program area (12) having pre-recorded therein at least one data file and the file management information for managing said at least one data file, comprising the steps of
reproducing the file management information from said replay-only area (12) at the time of initialization of said user recordable area (15) of the disc-shape recording medium (10), and
recording said file management information at a pre-set location in said user recordable area (15).

6. The method as claimed in claim 5 further comprising the step of overwriting the file management information at said pre-set location in said user recordable area (15), when a new data file is recorded in said user recordable area (15) of the disc-shaped recording medium (10), for updating said file management information with recording of the new data file in said user recordable area (15).

7. The method as claimed in claim 6 further comprising the step of overwriting the file management information at said pre-set location in said user recordable area (15), each time a new data file is recorded in said user recordable area (15) of the disc-shaped recording medium (10), for updating said file management information with recording of the new data file in said user recordable area (15).
